# EUROPÄISCHE PATENTSCHRIFT

(11) **EP 2 824 497 B1**
(45) Veröffentlichungstag und Bekanntmachung des Hinweises auf die Patenterteilung: **27.11.2019**
(21) Anmeldenummer: 14171932.8
(22) Anmeldetag: 11.06.2014
(51) Int. Cl.: G02B 21/33, G03F 7/20, G02B 21/00

(54) **Vorrichtung zum Ausbilden eines Immersionfilmes**
Device for forming an immersion film
Dispositif de formation d'un film d'immersion

(30) Priorität: 11.07.2013 DE 102013011544
(43) Veröffentlichungstag der Anmeldung: 14.01.2015
(73) Patentinhaber: Carl Zeiss Microscopy GmbH, 07745 Jena (DE)
(72) Erfinder: Scheps, Alexander, 37139 Adelebsen (DE); Herbst, Georg, 37085 Göttingen (DE); Fahlbusch, Ingo, 37077 Göttingen (DE); Rojahn, Timo, 37170 Uslar (DE); Konradi, Jakow, 52064 Aachen (DE)
(74) Vertreter: Müller, Silke

(56) Entgegenhaltungen:
- EP-A1- 1 489 461
- EP-A1- 1 717 628
- WO-A2-02/093232
- DE-U1- 20 205 080
- DE-U1-202006 014 666
- US-A1- 2007 103 661
- US-A1- 2010 027 109
- Anonymous: "Aquastop - Wikipedia", , 28. März 2013 (2013-03-28), XP055153027, Gefunden im Internet: URL:http://de.wikipedia.org/w/index.php?ti tle=Aquastop&oldid=116036845 [gefunden am 2014-11-14]

## Beschreibung

Die Erfindung betrifft eine Vorrichtung zum Ausbilden eines Immersionsfilmes zwischen einer Frontlinse eines Mikroskopobjektivs und einem Präparat an einem inversen Mikroskop, umfassend eine Schutzvorrichtung zur Vermeidung eines Flüssigkeitsaustritts aus dem Immersionsfilmbereich und eine Einrichtung zum Zuführen der Immersionsflüssigkeit (Autoimmersion) in den Immersionsfilmbereich mit Zuführ-, Abführ- Steuer- und Sensorleitungen, wobei die Schutzvorrichtung statisch im Grundkörper des Mikroskopstativs angeordnet ist und die Einrichtung zum Zuführen der Immersionsflüssigkeit in den Immersionsfilmbereich über ein Aquastop-System mit der Schutzvorrichtung in Verbindung steht.

Immersionsflüssigkeiten sind Flüssigkeiten, die einen Brechungsindex aufweisen, der nahe dem Brechungsindex des Glases liegt, welches für Probenträger und Linsen verwendet wird. Wird ein Luftspalt zwischen einer Objektivlinse und einem Probenträger mit einer solchen Immersionsflüssigkeit gefüllt, erhöht sich die numerische Apertur des Objektivs. Das führt zu einer erhöhten Lichtstärke sowie zu einem erhöhten Auflösungsvermögen des Objektivs.

Mit zunehmender Automatisierung der Arbeitsabläufe in der Mikroskopie kommt immer häufiger die Forderung nach einer automatisierten Zugabe dieser Immersionsflüssigkeit.
Ursache hierfür ist, dass die Zugänglichkeit zur Objektivfront bei modernen, insbesondere inversen Mikroskopen durch die zunehmende Komplexität der Systeme und die immer größer werdende Objektivapertur zusehends schlechter wird, so dass ein manuelles immergieren oft kaum noch möglich ist.

Inverse Mikroskope, die mit Immersionsobjektiven arbeiten, sind in der Regel auch mit einer Schutzvorrichtung ausgestattet, die das Mikroskop vor dem ablaufenden Immersionsmedium und anderen Flüssigkeiten schützen soll. Derartige Vorrichtungen, die objektivfeste Elemente in Form von Schutzvorrichtungen aufweisen, werden beispielsweise in DE 103 33 326 A1 und DE 100 50 825 A1 beschrieben. In der DE 20 2006 014 666 U1 ist eine Schutzvorrichtung in Form einer radial und axial elastischen Hülle gezeigt, um das Eindringen von Flüssigkeiten und Schmutz in die unter der Probenaufnahme angeordneten Elemente des Mikroskops zu verhindern.

Nachteilig bei diesen Lösungen ist, dass zwar durch ein objektivfestes Element ein geschützter Immersionsfilmbereich vorhanden ist, im gesamten System aber noch Immersionsflüssigkeit austreten kann. Ferner ist der fertigungstechnische Aufwand sehr hoch, da für jedes Objektiv eine spezielle Schutzvorrichtung vorzusehen ist.

Ferner wird in EP 1 717 628 A1 eine Vorrichtung zum Ausbilden eines Immersionsfilms zwischen einer Frontlinse eines Mikroskopobjektivs und einem Präparat an einem inversen Mikroskop beschrieben, die sowohl eine Schutzvorrichtung zur Vermeidung eines Flüssigkeitsaustritts aus dem Immersionsfilmbereich als auch eine Einrichtung zum Zuführen der Immersionsflüssigkeit in den Immersionsfilmbereich besitzt.

Ausgehend von den Nachteilen der Lösungen des genannten Standes der Technik liegt der Erfindung die Aufgabe zugrunde, eine Vorrichtung zum Ausbilden eines Immersionsfilmes an einem inversen Mikroskop dahingehend weiter zu bilden, dass ein Austritt von Immersionsflüssigkeit sowohl während der Zufuhr als auch während der mikroskopischen Untersuchung bei fertigungstechnisch minimierten Aufwand nahezu vollständig ausgeschlossen ist.

Diese Aufgabe wird erfindungsgemäß mit einer Vorrichtung der eingangs beschriebenen Art durch die Merkmale des Patentanspruchs 1 gelöst. Vorteilhafte Ausgestaltungen sind in den Unteransprüchen 2 bis 10 angegeben.

Erfindungsgemäß besteht die Schutzvorrichtung aus einer feststehenden Grundplatte (2), die einen zentrisch zum Strahlengang gerichteten Durchbruch (3) zur Aufnahme einer elastischen Membran (4) aufweist, wobei die Membran (4) eine zentrisch zum Strahlengang gerichtete Öffnung (5) für die Frontlinse (6) des Mikroskopobjektivs (1) besitzt.

Die erfindungsgemäße Lösung stellt somit eine Verknüpfung zwischen der Autoimmersion, das heißt, dem automatischen Zuführen der Immersionsflüssigkeit und dem Aquastop-System mit der Schutzvorrichtung dar.

Objektive sind in der Regel auf einem Objektivrevolver (Objektivwechsler) angebracht.

Nach den Lösungen des Standes der Technik, das heißt, wenn die Einrichtung zum Zuführen der Immersionsflüssigkeit direkt mit dem Objektiv verbunden ist, muss die Steuerung der Autoimmersion und/oder die Zuführung und Abführung der Immersionsflüssigkeit über eine Einheit realisiert werden, die die Bewegung des Objektivrevolvers (Objektivwechslers) ausgleicht. Das ist konstruktiv sehr aufwendig.

Die erfindungsgemäße Vorrichtung ermöglicht, die Verlegung der Zuführ- und Ableitungen sowie der Steuer- und Sensorleitungen auf relativ einfache Art und Weise statisch im Mikroskopgrundkörper selbst.
Damit ist es im Falle einer Störung der Zuführung der Immersionsflüssigkeit nicht mehr erforderlich, das komplette Objektiv zu tauschen. Es genügt das Auswechseln des Aquastop-Systems. Der Aufwand hierbei ist wesentlich geringer.

Darüberhinaus benötigt man für die im Objektivrevolver (Objektivwechsler) angeordneten Objektive nur eine Einrichtung zum Zuführen der Immersionsflüssigkeit in den Immersionsfilmbereich, während bei den Lösungen nach dem Stand der Technik jedes Objektiv über eine eigene Einrichtung verfügen muss.

Solange sich das Mikroskopobjektiv im Arbeitsbereich befindet schließt die Membran dicht mit der Frontgeometrie des Objektivs ab, so dass die Optik und Mechanik, die sich unter der Grundplatte, beziehungsweise dem Mikroskoptisch befindet, vor auslaufender Flüssigkeit geschützt ist.

In einer vorteilhaften Ausgestaltung sind der Durchbruch in der Grundplatte sowie die Öffnung in der Membran kreisförmig ausgebildet, wobei insbesondere für den Durchbruch in der Grundplatte auch andere Konturen denkbar sind.

Zweckmäßigerweise weist die Membran mindestens ein Element (Kanal) zum Zuführen der Immersionsflüssigkeit in den Immersionsfilmbereich auf, wobei dieses Element, beziehungsweise diese Elemente auch zum Absaugen der Immersionsflüssigkeit verwendet werden können.

In manchen Fällen ist es aber auch sinnvoll, wenn die Membran ein separates Element zum Absaugen der Immersionsflüssigkeit besitzt.

Eine vorteilhafte Ausgestaltung besteht auch darin, dass die Membran mehrere Elemente zum Zuführen und Absaugen der Immersionsflüssigkeit verfügt, so dass diese Vorgänge auch zeitgleich ausführbar sind.

Dies kann beispielsweise so aussehen, dass die Membran als Formteil mit mehreren eingearbeiteten Kanälen ausgeführt ist.

Das Absaugen der Immersionsflüssigkeit ist vor allem vor einem Objektivwechsel sinnvoll. Dabei wird das Objektiv in Z-Richtung aus dem Arbeitsbereich herausgefahren bis es den Kontakt zur Membrane verliert. Sobald ausreichend Abstand zwischen dem Objektiv und der Membran hergestellt ist, kann durch Drehen des Objektivrevolvers oder durch Schalten einer Wechseleinrichtung ein anderes Objektiv in den Strahlengang gebracht werden. Wenn das neue Objektiv in seinen Arbeitsbereich fährt, wird automatisch wieder Kontakt zur Membrane hergestellt, womit auch die Funktion des Aquastop-Systems wieder gegeben ist.

Die Absaugfunktion kann also genutzt werden, um die Immersionsflüssigkeit während des Mikroskopierens zu regeln.

Das Absaugen während des Mikroskopierens ist nicht zwingend nötig, weil auch hier die Funktion des Aquastop-Systems greift. Sollte mehr Immersionsflüssigkeit zugeführt werden, als die Flüssigkeitssäule halten kann, würde die Immersionsflüssigkeit über die Membrane zu dem Ablaufpunkt, beziehungsweise zu den Ablaufpunkten des Aquastop-Systems geleitet.

Es kann auch vorteilhaft sein, wenn mit einem Überschuss an Immersionsflüssikeit gearbeitet wird, um sicherzustellen, dass sich immer ausreichend Flüssigkeit zwischen dem Objektiv und dem Präparat befindet oder auch um den Bereich zwischen dem Objektiv und dem Präparat definiert zu spülen. Auf diese Art und Weise lassen sich beispielsweise Schmutzpartikel abtransportieren.

Dazu sind in einer vorteilhaften Ausgestaltung Sensoren vorhanden, die die Menge an Immersionsflüssigkeit zwischen dem Mikroskopobjektiv und einem Präparat detektieren können, so dass bei Veränderungen die Autoimmersion steuerbar ist.

Vorteilhafterweise sind dann zum Zwecke der Erfassung dieser Veränderungen auf der Membranoberseite Kontaktflächen aufgedampft.

Weiterhin besteht eine vorteilhafte Ausgestaltung darin, dass die Membran aus zwei übereinanderliegenden Einzelmembranen besteht, zwischen denen die Immersionsflüssigkeit zur Frontlinse des Mikroskopobjektivs zuführ- und ableitbar ist. Die beiden Membranen dichten im Bereich des Außendurchmessers miteinander ab. Die Immersionsflüssigkeit, die zwischen die Membranen gepumpt wird, kann nur am Innendurchmesser, das heißt im Bereich der Frontlinse des Mikroskopobjektivs, austreten. Auch bei dieser Variante kann die Immersionsflüssigkeit zugeführt und abgesaugt werden.

Als Pumpen wären dabei beispielsweise Peristaltik-, Microzahnring-, Membran- oder Piezopumpen denkbar, wobei die Steuerung dieser Pumpen entweder nach dem Überschussprinzip oder über eine geregelte Fördermenge erfolgen kann.

Von Vorteil ist es auch, wenn zum Zwecke des verbesserten Haltens der Immersionsflüssigkeit auf der Frontlinse des Mikroskopobjektivs die Öffnung in der Membran einen Dichtungsrand aufweist.

Weiterhin besteht eine vorteilhafte Ausgestaltung der erfindungsgemäßen Vorrichtung darin, dass
das Aquastop-System durch mindestens einen Ablaufkanal in der Grundplatte charakterisiert ist, durch die die über die Membran ablaufende, überschüssige Immersionsflüssigkeit, abführbar ist.

Zweckmäßigerweise sind die Zuführ-, Abführ-, Steuer- und Sensorleitungen statisch im Grundkörper des Mikroskops angeordnet.

Eine weitere vorteilhafte Ausgestaltung besteht darin, dass Sensoren vorhanden sind, die die Menge an Immersionsflüssigkeit zwischen dem Mikroskopobjektiv und einem Präparat detektieren können, so dass bei Veränderungen die Autoimmersion steuerbar ist.

Vorteilhafterweise sind zum Zwecke der Erfassung von Veränderungen auf der Membranoberseite Kontaktflächen aufgedampft.

Die Erfindung soll nachstehend anhand von Beispielen näher erläutert werden. Dazu zeigen:
- Fig. 1:: eine schematische Darstellung der erfindungsgemäßen Vorrichtung mit einer Membran,
- Fig. 2:: eine schematische Darstellung der Anordnung der Membran mit einem Rand zum besseren Halten der Immersionsflüssigkeit,
- Fig. 3:: eine vergrößerte Darstellung der Membran nach Figur 2,
- Fig. 4:: eine schematische Darstellung der Membran als Formelement,
- Fig. 5:: eine schematische Darstellung einer doppelwandigen Membran,
- Fig. 6:: eine schematische Darstellung der Lage der Membran in der Grundplatte des Mikroskops und
- Fig. 7:: eine schematische Darstellung der Membran nach Figur 6.

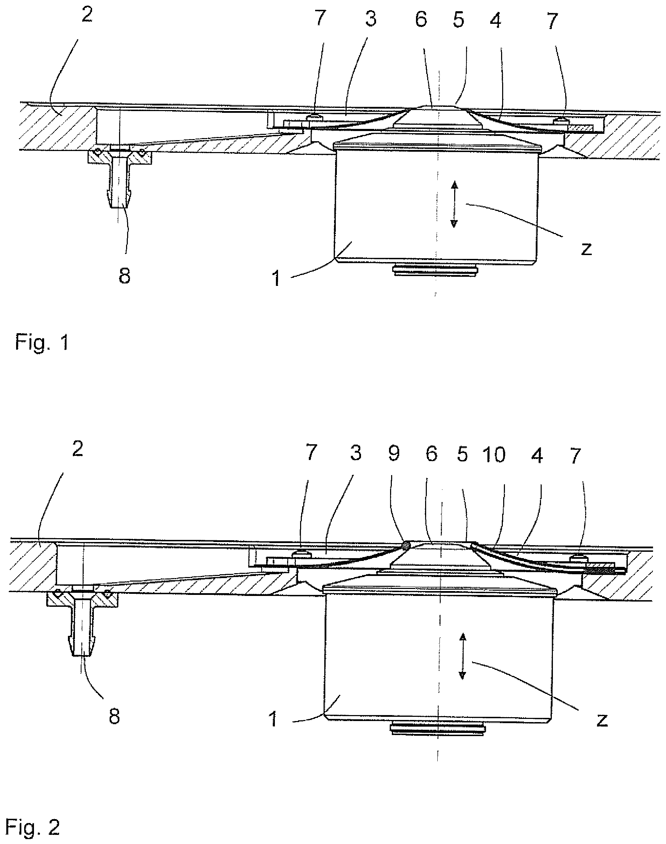

Figur 1 zeigt ein Objektiv 1 eines inversen Mikroskops, welches in einer Arbeitsposition unterhalb eines im Grundkörper des Mikroskopstativs angeordneten Scanningtisch, der über eine feststehende Grundplatte 2 verfügt, angeordnet ist. Die als Schutzvorrichtung ausgebildete Grundplatte 2 besitzt zentrisch zum Strahlengang einen, vorzugsweise kreisförmigen Durchbruch 3. Im Durchbruch 3 befindet sich eine elastische Membran 4, die zentrisch eine kreisförmige Öffnung 5 für den Strahlungsdurchgang einer Frontlinse 6 des Mikroskopobjektivs 1 aufweist und über Befestigungselemente 7 mit der Grundplatte 2 verbunden ist.

Solange sich das Objektiv 1 in der Arbeitsposition befindet schließt die Membran 4 dicht mit der Frontgeometrie des Mikroskopobjektivs 1 ab. Dadurch ist die Optik und Mechanik, die sich unterhalb des Scanningtisches befindet, vor auslaufender Flüssigkeit geschützt (Schutzvorrichtung). Gleichzeitig ist in dieser Position die Funktion des Aquastop-Systems gegeben. Überschüssige Immersionsflüssigkeit wird über einen Ablaufkanal 8 abgeführt.

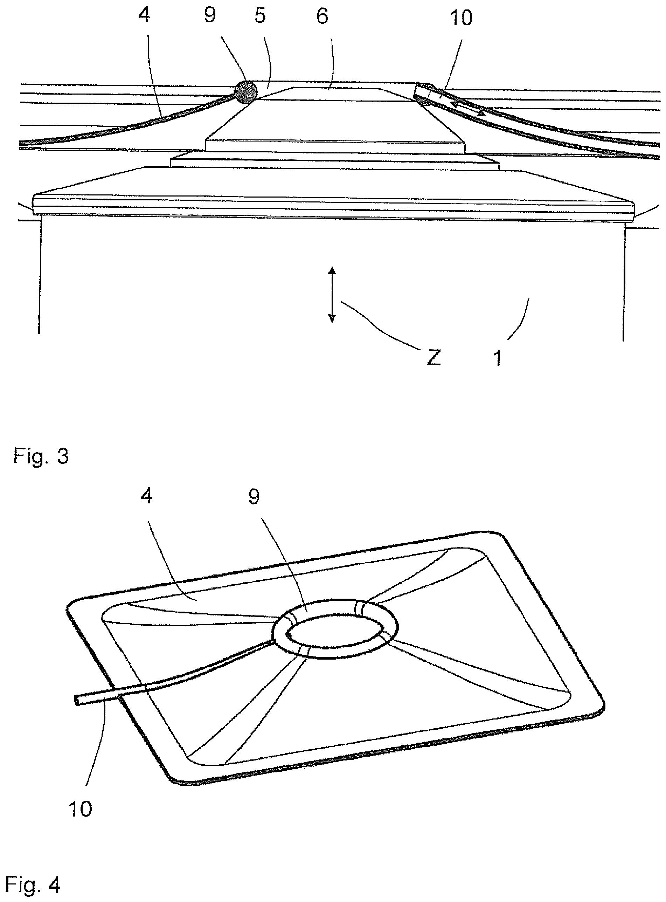

Figuren 2 und 3 zeigen Darstellungen der Membran 4 mit einem, gegenüber der Darstellung nach Figur 1, zusätzlichen, im Querschnitt kreisförmigen, Dichtungsrand 9 mit einem Durchmesser von ca. 2,5 mm. Der Dichtungsrand 9 bewirkt, dass die Immersionsflüssigkeit besser auf der Frontlinse 6 gehalten wird.
Die Membran 4 besitzt ferner ein Element 10 (Kanal) zum Zuführen der Immersionsflüssigkeit in den
Immersionsfilmbereich, welches auch zum Ablaufen, beziehungsweise Absaugen der Immersionsflüssigkeit eingesetzt werden kann.

Figur 4 zeigt die Membran 4 als Formteil mit einer Dicke von ca. 0,5 mm. Sie besitzt im vorliegenden Ausführungsbeispiel das nach den Figuren 2 und 3 beschriebene Element 10 (Kanal) zum Zuführen, beziehungsweise Abführen der
Immersionsflüssigkeit. Denkbar ist hier auch die Einarbeitung mehrerer dieser Kanäle.

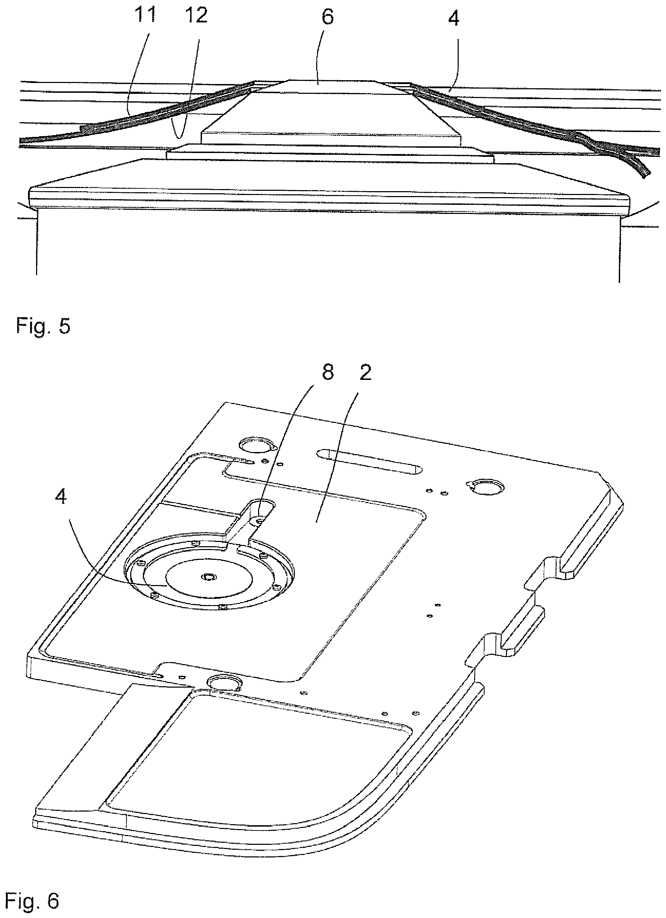

Figur 5 zeigt das Aquastop-System mit einer doppelwandigen Membran 4, bestehend zwei dünnen Einzelmembranen 11 und 12, zwischen denen die Immersionsflüssigkeit zur Frontlinse 6 geführt wird, wobei die beiden Einzelmembrane 11 und 12 im Bereich ihrer Außendurchmesser miteinander abdichten. Die Immersionsflüssigkeit, die zwischen die Einzelmembrane 11 und 12 gepumpt wird, kann nur an den Innendurchmessern, das heißt, im Bereich der Frontlinse 6 austreten. Auch bei diesem Beispiel kann die Immersionsflüssigkeit sowohl zu- als auch abgeführt werden.

In Figur 6 ist die Lage der Membran 4 in der Grundplatte 2 des Scanningtisches zu sehen. Die überschüssige Immersionsflüssigkeit wird bedingt durch das Aquastop-System über den Ablaufkanal 8 abgeführt oder über die Membran 4 abgesaugt.

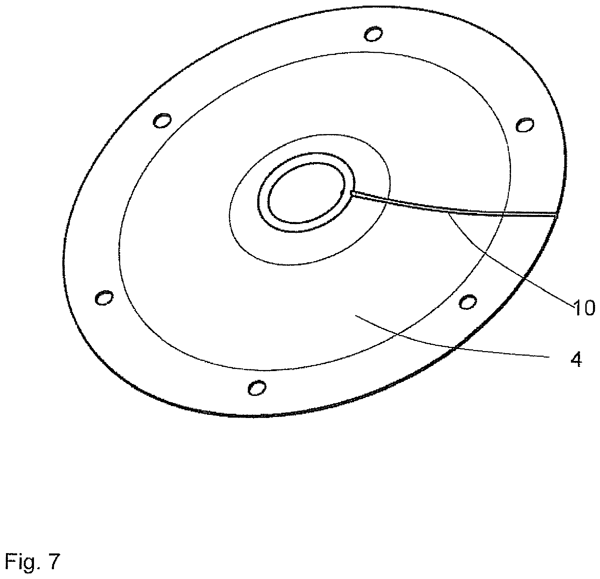

Figur 7 zeigt eine Darstellung der Membran 4 nach Figur 6 mit dem eingearbeiteten Element 10 (Kanal) zum Zuführen der Immersionsflüssigkeit in den Immersionsfilmbereich.

### Bezugszeichenliste

- 1: Mikroskopobjektiv
- 2: Grundplatte
- 3: Durchbruch
- 4: Membran
- 5: Öffnung
- 6: Frontlinse
- 7: Befestigungselemente
- 8: Ablaufkanal
- 9: Dichtungsrand
- 10: Element (Kanal)
- 11,12: Einzelmembran (doppelwandig)
- Z: Richtung

## Patentansprüche

1. Vorrichtung zum Ausbilden eines Immersionsfilmes zwischen einer Frontlinse (6) eines Mikroskopobjektivs (1) und einem Präparat an einem inversen Mikroskop, umfassend
eine Schutzvorrichtung zur Vermeidung eines Flüssigkeitsaustritts aus dem Immersionsfilmbereich,
eine Einrichtung zum Zuführen der Immersionsflüssigkeit in den Immersionsfilmbereich mit Zuführ-, Abführ- Steuer- und Sensorleitungen, **dadurch gekennzeichnet, dass**
die Schutzvorrichtung statisch im Grundkörper des Mikroskopstativs angeordnet ist,
die Schutzvorrichtung aus einer feststehenden Grundplatte (2) besteht, die einen zentrisch zum Strahlengang gerichteten Durchbruch (3) zur Aufnahme einer elastischen Membran (4) aufweist und die Membran (4) eine zentrisch zum Strahlengang gerichtete Öffnung (5) für die Frontlinse (6) des Mikroskopobjektivs (1) besitzt,
die Membran (4) als Formteil mit mindesten einem eingearbeiteten Kanal für die Zufuhr und mindestens einem Kanal für den Abfluss ausgebildet ist, oder die Membran (4) doppelwandig ausgebildet ist und aus zwei übereinanderliegenden Einzelmembranen (11,12) besteht, zwischen denen die Immersionsflüssigkeit zur Frontlinse (6) des Mikroskopobjektivs (1) zuführ- und ableitbar ist,
die Membran (4) so ausgebildet ist, dass sie im Arbeitsbereich des Mikroskopobjektivs (1) mit der Geometrie der Frontlinse (6) dicht abschließt, und
die Grundplatte (2) mindestens einen Ablaufkanal (8) aufweist, durch die die über die Membran (4) ablaufende, überschüssige Immersionsflüssigkeit, abführbar ist.

2. Vorrichtung zum Ausbilden eines Immersionsfilmes nach Anspruch 1, **dadurch gekennzeichnet, dass** der Durchbruch (3) der Grundplatte (2) und die Öffnung (5) der Membran (4) kreisförmig ausgebildet sind.

3. Vorrichtung zum Ausbilden eines Immersionsfilmes nach den Ansprüchen 1 bis 2, **dadurch gekennzeichnet, dass** die Membran (4) mindestens ein Element (10) der Einrichtung zum Zuführen der Immersionsflüssigkeit in den Immersionsfilmbereich aufweist.

4. Vorrichtung zum Ausbilden eines Immersionsfilmes nach Anspruch 3, **dadurch gekennzeichnet, dass** das Element (10) der Einrichtung zum Zuführen der Immersionsflüssigkeit in den Immersionsfilmbereich auch zum Absaugen der Immersionsflüssigkeit verwendbar ist.

5. Vorrichtung zum Ausbilden eines Immersionsfilmes nach den Ansprüchen 1 bis 3, **dadurch gekennzeichnet, dass** die Membran (4) mindestens ein separates Element zum Absaugen der Immersionsflüssigkeit aufweist.

6. Vorrichtung zum Ausbilden eines Immersionsfilmes nach den Ansprüchen 1 bis 3, **dadurch gekennzeichnet, dass** die Öffnung (5) in der Membran (4) zum Zwecke des verbesserten Haltens der Immersionsflüssigkeit auf der Frontlinse (6) einen Dichtungsrand (9) aufweist.

7. Vorrichtung zum Ausbilden eines Immersionsfilmes nach den Ansprüchen 1 bis 6, **dadurch gekennzeichnet, dass** zum Zwecke der Erfassung von Veränderungen auf der Membranoberseite Kontaktflächen aufgedampft sind.

## Claims

1. Apparatus for forming an immersion film between a front lens (6) of a microscope objective (1) and a preparation in an inverted microscope, comprising a protective apparatus for avoiding liquid egress from the immersion film region,
a device for delivering the immersion liquid into the immersion film region with delivery, discharge, control and sensor lines, **characterized in that** the protective apparatus is statically arranged in the base body of the microscope stand,
the protective apparatus consists of a fixed base plate (2) having an orifice (3), situated centrically with respect to the beam path, for holding an elastic membrane (4), and the membrane (4) has an opening (5), situated centrically with respect to the beam path, for the front lens (6) of the microscope objective (1),
the membrane (4) is formed as a shaped part with at least one incorporated channel for the delivery and at least one channel for the discharge, or the membrane (4) is formed in double-walled fashion and consists of two individual membranes (11, 12) lying one above the other, between which the immersion liquid is deliverable to the front lens (6) of the microscope objective (1) and is dischargeable therefrom,
the membrane (4) is configured such that it terminates with the geometry of the front lens (6) in a sealing fashion in the work area of the microscope objective (1),
and
the base plate (2) has at least one discharge channel (8) through which the excess immersion liquid running off via the membrane (4) is dischargeable.

2. Apparatus for forming an immersion film according to Claim 1, **characterized in that** the orifice (3) in the base plate (2) and the opening (5) in the membrane (4) are embodied to be circular.

3. Apparatus for forming an immersion film according to Claims 1 to 2, **characterized in that** the membrane (4) has at least one element (10) of the device for delivering the immersion liquid into the immersion film region.

4. Apparatus for forming an immersion film according to Claim 3, **characterized in that** the element (10) of the device for delivering the immersion liquid into the immersion film region is also utilizable for removing the immersion liquid by suction.

5. Apparatus for forming an immersion film according to Claims 1 to 3, **characterized in that** the membrane (4) has at least one separate element for removing the immersion liquid by suction.

6. Apparatus for forming an immersion film according to Claims 1 to 3, **characterized in that** the opening (5) in the membrane (4) has a sealing rim (9) for the purpose of improved retention of the immersion liquid on the front lens (6) .

7. Apparatus for forming an immersion film according to Claims 1 to 6, **characterized in that** contact areas are vapour-deposited on the membrane upper side for the purpose of capturing changes.

## Revendications

1. Arrangement pour former un film d'immersion entre une lentille avant (6) d'un objectif de microscope (1) et une préparation sur un microscope inversé, comprenant un arrangement de protection destiné à éviter une sortie de liquide hors de la zone du film d'immersion,
un dispositif destiné à acheminer le liquide d'immersion dans la zone du film d'immersion avec des lignes d'arrivée, d'évacuation, de commande et de capteur, **caractérisé en ce que**
l'arrangement de protection est disposé de manière statique dans le corps de base du statif du microscope, l'arrangement de protection se compose d'une plaque de base (2) fixe qui possède un passage (3) orienté de manière centrée par rapport au trajet de rayon et destinée à accueillir une membrane (4) élastique et la membrane (4) possède une ouverture (5) orientée de manière centrée par rapport au trajet de rayon pour la lentille avant (6) de l'objectif de microscope (1),
la membrane (4) est réalisée sous la forme d'une pièce moulée comprenant au moins un canal incorporé pour l'arrivée et au moins un canal pour l'évacuation, ou la membrane (4) est réalisée à double paroi et se compose de deux membranes individuelles (11, 12) superposées entre lesquelles le liquide d'immersion peut être acheminé vers la lentille avant (6) de l'objectif de microscope (1) et en être évacué, la membrane (4) est configurée de telle sorte qu'elle se termine de manière étanche avec le géométrie de la lentille avant (6) dans la zone de travail de l'objectif de microscope (1), et
la plaque de base (2) possède au moins un canal d'écoulement (8) à travers lequel peut être évacué le liquide d'immersion en surplus qui s'écoule au-dessus de la membrane (4).

2. Arrangement pour former un film d'immersion selon la revendication 1, **caractérisé en ce que** le passage (3) de la plaque de base (2) et l'ouverture (5) de la membrane (4) sont de configuration circulaire.

3. Arrangement pour former un film d'immersion selon les revendications 1 à 2, **caractérisé en ce que** la membrane (4) possède au moins un élément (10) du dispositif destiné à acheminer le liquide d'immersion dans la zone du film d'immersion.

4. Arrangement pour former un film d'immersion selon la revendication 3, **caractérisé en ce que** l'élément (10) du dispositif destiné à acheminer le liquide d'immersion dans la zone du film d'immersion peut également être utilisé pour aspirer le liquide d'immersion.

5. Arrangement pour former un film d'immersion selon les revendications 1 à 3, **caractérisé en ce que** la membrane (4) possède au moins un élément séparé pour aspirer le liquide d'immersion.

6. Arrangement pour former un film d'immersion selon les revendications 1 à 3, **caractérisé en ce que** l'ouverture (5) dans la membrane (4) possède un bord d'étanchéité (9) dans le but d'un meilleur maintien du liquide d'immersion sur la lentille avant (6) .

7. Arrangement pour former un film d'immersion selon les revendications 1 à 6, **caractérisé en ce que** des surfaces de contact sont métallisées sous vide sur le côté supérieur de la membrane dans le but de détecter des modifications.
